# EUROPEAN PATENT APPLICATION

(11) **EP 4 847 815 A1**
(43) Date of publication of application: **02.12.2026**
(21) Application number: 26181973.4
(22) Date of filing: 29.05.2026
(51) Int. Cl.: F16L 5/04, A62C 2/06, A62C 3/16, H02G 3/04

(54) **PASSIVE FIRE PROTECTION DEVICE**

(30) Priority: 30.05.2025 AU 2025902149
(71) Applicant: BOSS Products (Australia) Pty Ltd, Caringbah, New South Wales 2229 (AU)
(72) Inventor: PRIOR, Mark, Caringbah, 2229 (AU); SCOTT, Warwick, Caringbah, 2229 (AU)
(74) Representative: Bennett, Adrian Robert J.

(57) **Abstract**

A firestopping device may include a housing with panel members formed of sheet material. The panel members are joined by interconnections to define a passageway that extends between first and second ends. One or more of the interconnections are formed with a longitudinal seam that joins adjacent panel members in the housing. The seam has a seam channel that is external to the passageway of the housing, and is configured to allow slurry to flow into the seam channel. Intumescent material is supported on the internal surface of the housing; the intumescent material swells in response to heat. Engagement of the housing within the hardened material of the building element is provided by the hardened material extending around the seams and into the seam channels.

## Description

### Field of the invention

The present invention relates to a device for providing passive fire protection within a building. In particular, the present invention relates to a firestopping device for a penetration in a building element, through which service components are to pass.

### Background

It is known to provide service components (such as cables for electrical, data, and communication transmission; conduits and pipes for hot, cold, fire sprinkler, and waste water; drainage; HVAC ducts and pipes; and exhaust venting) throughout a building for the amenity, safety, and security of the building occupants. Where one or more service components pass through one of building elements (such as a floor, wall, or soffit) there is an opening in the respective building element. Any location at which one or more service components pass through a building element is known as a penetration.

When constructing a building, it is common for the building elements to be constructed prior to installation of the service components. There is also benefit in allowing for retrofitting of additional service components during the occupancy of the building. To slow or prevent the spread of fire and smoke within a building, it is known to compartmentalize the building into smaller regions, or "compartments". This is, in part, achieved through the use of fire-resistant floors, walls, and soffits that enclose and separate the various compartments. Penetrations for service components can compromise the fire / smoke containment of a compartment. To maintain a designated fire resistance level of a fire-rated building element, it is known to install a passive firestopping device within the penetration. A firestopping device has features and components to provide resistance to passage of fire / smoke through the penetration. An example of a firestop that may be installed in a building is described in Australian Patent Application No. 2021221808.

When constructing a building element with a curable material (such as concrete), it is preferable that the building element is formed with a firestopping device cast into that material at the desired position. Benefits of this approach include that the opening for the penetration does not need to be created after the curable material is cured and hardened. However, the reliability and effectiveness of a "cast in" firestopping device is compromised if the curable material enters the internal passage of the device during the casting process. Further, the firestopping device is exposed the hydrostatic forces of the wet curable material. There can be additional costs, and production delays incurred in the event that the firestopping device collapses as the curable material is curing and hardening.

There is a need to address the above, and/or at least provide a useful alternative.

For the purposes of this specification and the claims that follow, the term "slurry" is used to refer to a curable material (such as concrete) in its wet, flowable, and uncured state. Additionally, the term "hardened material" is used to refer to a curable material in its cured state (that is, after chemical reactions have hardened the curable material sufficiently to form a solid matrix of bound materials).

### Summary

There is provided a firestopping device for a penetration in a building element that is constructed with a curable material, the firestopping device comprising:
a housing having:
   two or more panel members that are formed of sheet material, the panel members being joined by interconnections to define a passageway that extends between first and second longitudinal ends, whereby when the firestopping device is installed in a building, service components are to extend through the passageway,
   one or more of the interconnections being formed with a seam that extends longitudinally with respect to the housing and joins adjacent panel members in the housing, wherein the seam defines a seam channel that is external to the
passageway of the housing, and the seam is configured to allow slurry to flow into the seam channel; and
intumescent material that is supported on the internal surface of the housing with respect to the passageway, wherein the intumescent material swells in response to heat,
whereby engagement of the housing within the hardened material of the building element is provided by the hardened material extending around the seams and into the seam channels.

There is also provided a firestopping device for a penetration in a building element that is constructed with a curable material, the firestopping device comprising:
a housing having:
   two or more panel members that are formed of sheet material, the panel members being joined by interconnections to define a passageway that extends between first and second longitudinal ends, whereby when the firestopping device is installed in a building, service components are to extend through the passageway,
   one or more of the interconnections being formed with a seam that extends longitudinally with respect to the housing and joins adjacent panel members in the housing, wherein the seam is formed by interlocking hem formations at lateral edge portions of the respective panel members, one of the hem formations being an outer seam portion, and the other of the hem formations being an inner seam portion that is shaped to locate within the outer seam portion; and
intumescent material that is supported on the internal surface of the housing with respect to the passageway, wherein the intumescent material swells in response to heat,
wherein each seam is configured such that at least a portion of the seam permits a relative displacement of the inner seam portion within the outer seam portion to thereby create a cavity between the inner and outer seam portions into which slurry penetrates,
whereby engagement of the housing within the hardened material of the building element is provided by the hardened material extending around the seams and into the cavity.

In at least some embodiments, each interconnection is assembled to define an elongate opening that extends parallel with each respective seam, whereby slurry is able to flow into the seam channel via the elongate opening.

Alternatively or additionally, one or more of the panel members has apertures adjacent to lateral edges of the respective panel member, whereby slurry is able to flow into the seam channel via the apertures.

In certain embodiments, each seam is formed by interlocking hem formations at lateral edge portions of the respective panel members, one of the hem formations being an outer seam portion with an open loop formation, and the other of the hem formations being an inner seam portion that is shaped to locate within the outer seam portion. Preferably, the inner seam portion and outer seam portion are configured to have a transition fit.

Preferably, the apertures adjacent to the lateral edges of the panel members are located in the portion of the respective panel member that includes one of the hem formations.

Preferably, the inner and outer seam portions are configured such that the hem formation of the inner seam portion is locatable within hem formation of the outer seam portion by sliding the inner seam portion longitudinally into the outer seam portion. Alternatively or additionally, the inner and outer seam portions can be configured such that the hem formation of the inner seam portion is locatable within hem formation of the outer seam portion by transversely forcing the inner seam portion into the space surrounded by the outer seam portion.

In at least some embodiments, the hem formation of the inner seam portion has an open loop formation.

In some examples, the interconnection is formed to permit limited relative displacement of the inner seam portion within the outer seam portion in a direction that is generally orthogonal to the longitudinal direction of the housing. Preferably, the inner seam portion and/or the outer seam portion are formed such that applied external pressure on the panel members when the inner seam portion is at the limit of relative displacement within the outer seam portion acts to enhance engagement of the inner and outer seam portions of the respective interconnection.

In preferred embodiments, the seams are shaped such that deflection of the respective panels under hydrostatic forces applied externally to the housing increases engagement of the respective panels within the seams to thereby resist disassembly of the interconnection.

In at least some embodiments, each interconnection is formed with at least one slot in one of the inner and outer seam portions, and at least one locking tab in the other of outer and inner seam portions, whereby when the respective panel members are in predetermined alignment with one another, the locking tab is bent from an initial position to a deflected position to project through the at least one slot, whereby with the locking tab in the deflected position and extending through the slot, the disassembly of the interconnection is inhibited.

Preferably, the housing includes flanges that project outwardly with respect to the passageway, the flanges provide a base at the first longitudinal end of the firestopping device for securing the firestopping device to formwork.

In at least some embodiments, the firestopping device further comprises one or more rib formations that are configured to provide resistance to pressure-induced deformation of the panel members. Alternatively or additionally, the firestopping device further comprises one or more rib formations within the sheet material of panel members, wherein the rib formations are shaped to provide resistance to pressure-induced deformation of the panel members, and/or to provide engagement with the hardened material of the building element. The rib formations can be shaped to project outwardly with respect to the passageway, to project inwardly with respect to the passageway, or combinations thereof.

In certain examples, the panel members of the housing are formed such that the passageway has a rectangular cross section, and one or more of the rib formations are provided to the panel members of the housing that define the longer sides of the rectangular cross section. In some examples, the rib formations extend generally transversely with respect to the direction between the first and second longitudinal ends.

The firestopping device can further comprise brackets that are attached to internal faces of the housing, wherein the intumescent material is supported on the internal surfaces of the housing by the brackets. In some embodiments, the brackets extend generally transversely with respect to the direction between the first and second longitudinal ends. In certain embodiments, at least some of the brackets comprise at least one rib formation, wherein the rib formations are configured to provide support to resist pressure-induced deformation of the panel members to which the respective bracket is attached.

In some examples, the firestopping device further comprises a lid that is configured to cover the second longitudinal end of the passageway, and to block slurry entering the passageway. In one example, the lid includes a planar primary section that has a periphery that is dimensioned to be larger than the cross section of the passageway, and flanges that each project from a first side of the primary section in a direction that is transverse to the plane of the primary section, wherein when the lid is fitted to the housing, the flanges locate the lid with respect to the passageway.

The lid may be formed such that, when fitted to the housing, at least some of the flanges are inner flanges that configured are to contact internal surfaces of the housing at the second longitudinal end. In some examples, the lid has a pair of the inner flanges, wherein the pair of inner flanges contact the housing on opposing faces of the housing.

Alternatively or additionally, the lid may be formed such that, when fitted to the housing, at least some flanges are outer flanges that are configured to contact external surfaces of the housing at the second longitudinal end. In some examples, the lid is formed with a second pair of the outer flanges, wherein the pair of outer flanges contact the housing on opposing sides of the housing.

In some examples, the outer flanges include holes for use in releasably attaching the lid to the housing.

In some examples, the lid includes a handle.

Preferably, the housing has four panel members that are joined such that the passageway has a generally rectangular cross section. More preferably, the housing has four interconnections that are each formed with the seam.

The firestopping device can further comprise an extension sleeve that has:
two or more panel members that are formed of sheet material, the panel members being joined by interconnections to define a passageway that extends between first and second longitudinal ends,
one or more of the interconnections being formed with a seam that joins adjacent panel members in the extension sleeve, wherein the seam defines a seam channel that is external to the passageway of the extension sleeve,
wherein the housing and the extension sleeve are configured to be secured to one another, and with the passageways of the housing and the extension sleeve being in alignment with one another in the longitudinal direction, whereby when the firestopping device is installed in a building, service components are to extend through the aligned passageways.

### Brief description of the drawings

In order that the invention may be more easily understood, embodiments will now be described, by way of example only, with reference to the accompanying drawings, in which:
- Figure 1:: is an isometric view of a firestopping device according to a first embodiment;
- Figure 2:: is a top view of the firestopping device shown in Figure 1;
- Figure 3:: is a first transverse cross section of Region A in Figures 1 and 2;
- Figure 4:: is a second transverse cross section of Region A in Figures 1 and 2;
- Figure 5:: is an exploded end view of the detail shown in Figure 3;
- Figure 6:: is a front view of the firestopping device shown in Figure 1;
- Figure 7:: is a side view of the firestopping device shown in Figure 1;
- Figure 8:: is an enlarged view of Region B in Figures 1 and 7, showing the locking tab in its undeflected state;
- Figure 9:: is an enlarged view of Region B in Figures 1 and 7, showing the locking tab in its deflected state;
- Figure 10:: is a cross sectional view of the firestopping device, as viewed along the line *X-Xin* Figure 6;
- Figure 11:: is a cross sectional view of the firestopping device, as viewed along the line *XI-XI* in Figure 7;
- Figure 12:: is a bottom view of the firestopping device shown in Figure 1;
- Figure 13:: is an isometric view showing the firestopping device of Figure 1 in an unassembled state;
- Figure 14:: is an isometric view showing the firestopping device of Figure 1, together with a lid;
- Figure 15:: is a front view of the firestopping device and lid shown in Figure 14;
- Figure 16:: is a side view of the firestopping device and lid shown in Figure 14;
- Figure 17:: is a top view of the firestopping device and lid shown in Figure 14;
- Figure 18:: is a lower isometric view of the lid shown in Figure 14;
- Figures 19 to 22:: are illustrative views showing stages in construction of a building element having a penetration for service components, with the firestopping device of Figure 1;
- Figure 23:: is a schematic upper isometric view of the firestopping device of Figure 1 cast into a building element;
- Figure 24:: is a bottom view of the firestopping device and building element shown in Figure 24;
- Figures 25 and 26:: are schematic views corresponding with Figures 3 and 4, illustrating embedment of the seams of the firestopping device in hardened material;

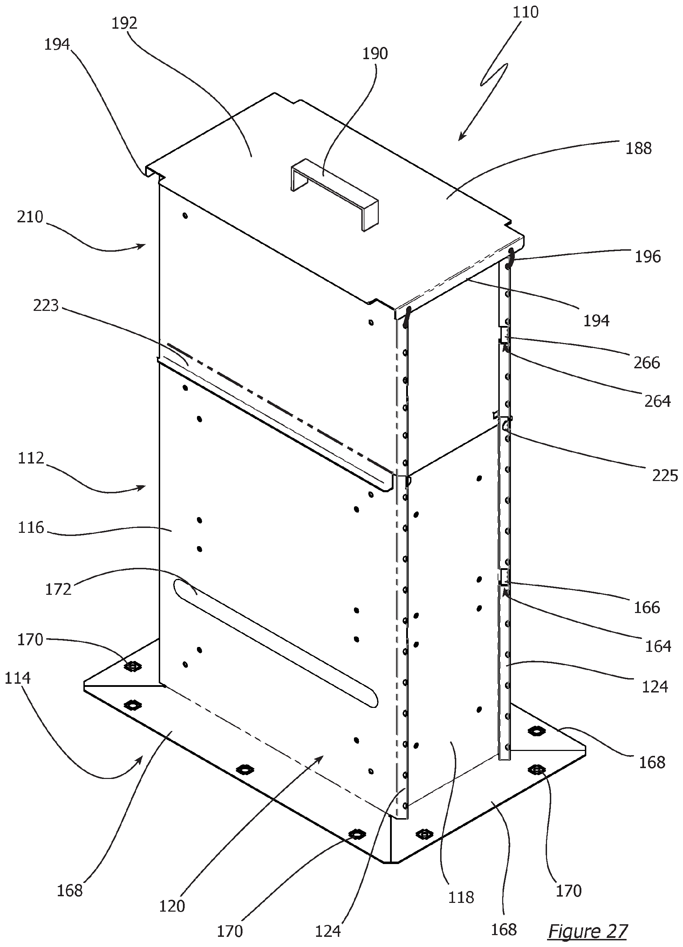

- Figure 27:: is an isometric view showing a firestopping device according to a second embodiment;
- Figure 28:: is an isometric view of the extension sleeve of the firestopping device shown in Figure 27;
- Figure 29:: is a front view of the firestopping device shown in Figure 27;
- Figure 30:: is a side view of the firestopping device shown in Figure 27;
- Figure 31:: an enlarged view of Region C in Figure 30, with the extension sleeve omitted;
- Figure 32:: an enlarged view of Region C in Figure 30, showing the extension sleeve and the housing;
- Figure 33:: is an isometric view showing a firestopping device according to a third embodiment;
- Figure 34:: is a front view of the firestopping device shown in Figure 33;
- Figure 35:: is a cross sectional view of the firestopping device, as viewed along the line *XXX-XXX* in Figure 34;
- Figure 36:: is a side view of the firestopping device shown in Figure 33; and
- Figure 37:: is a cross sectional view of the firestopping device, as viewed along the line *XXXI-XXXI* in Figure 36.

### Detailed description

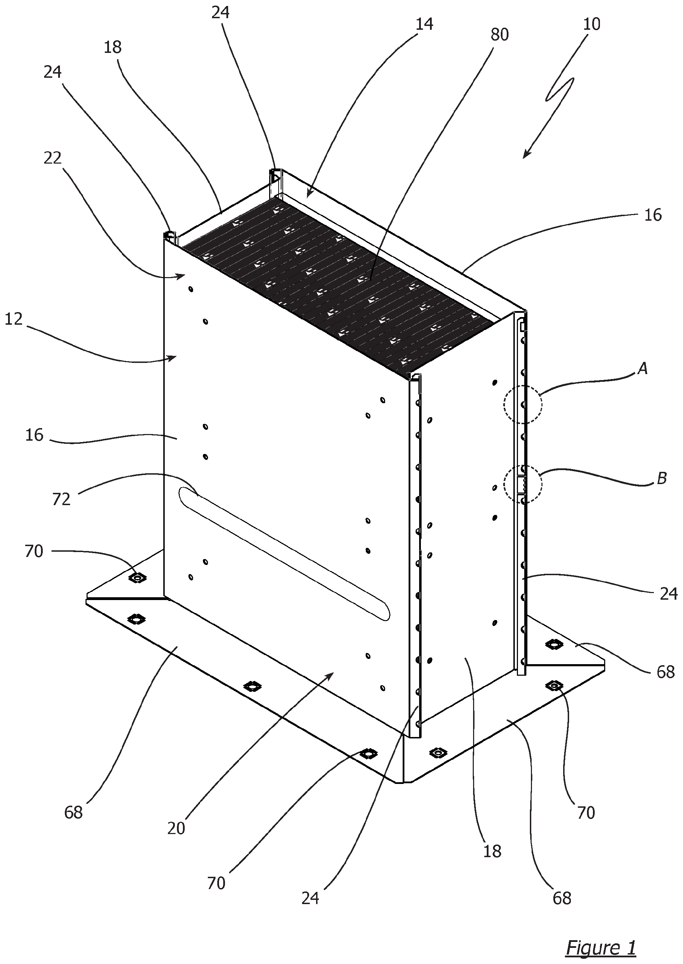

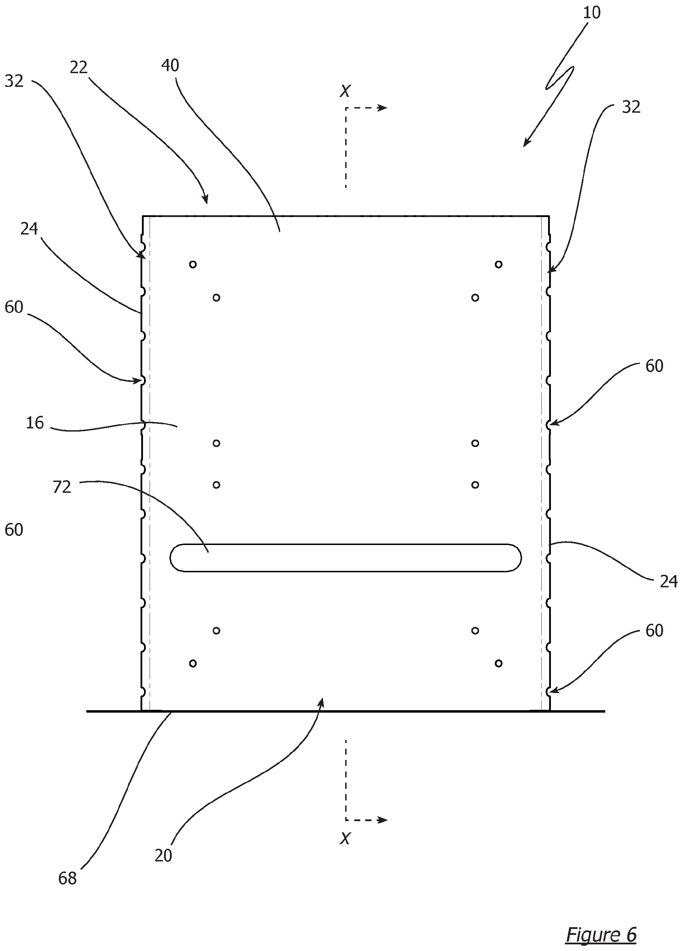

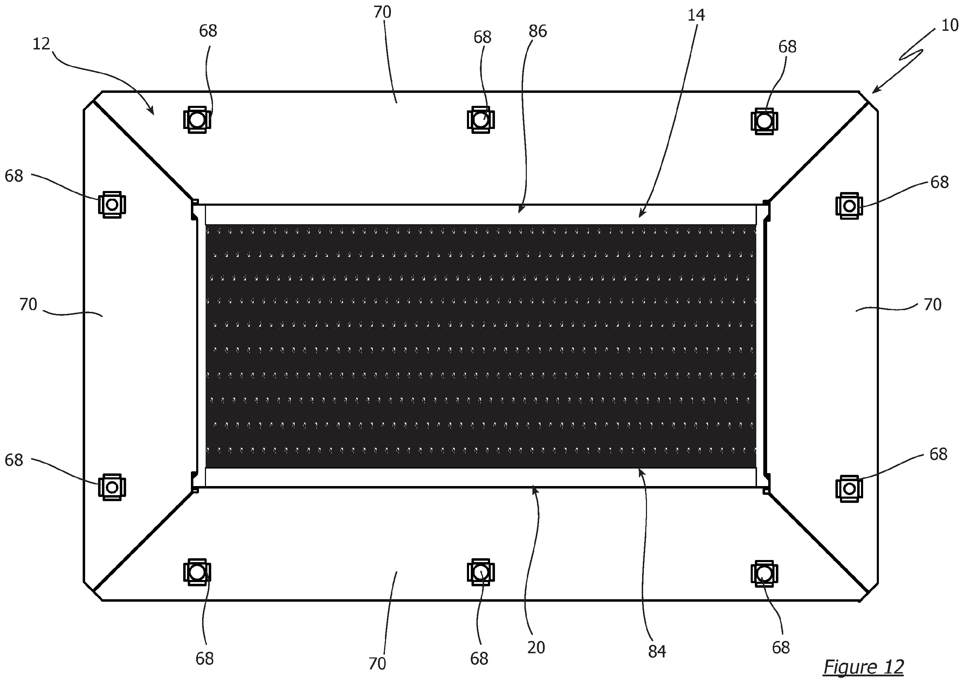

Figures 1 to 13 show a firestopping device 10 according to a first embodiment. The firestopping device 10 is suited for use in providing passive fire and smoke resistance in a penetration in a building element that is constructed with a curable material, such as concrete.

The firestopping device 10 has a housing 12 that defines a passageway 14. Whereby when the firestopping device 10 is installed with the building element in a building, service components are to extend through the passageway 14, and hence also through the penetration in that building element.

The housing 12 has panel members that are formed of sheet material. In this particular embodiment, the housing 12 has four panel members: two major panel members 16, and two side panel members 18. The panel members 16, 18 are joined by interconnections to define the passageway 14. The housing 12 has a first longitudinal end 20, and a second longitudinal end 22. Service components can be passed through the passageway 14 via either longitudinal end 20, 22 so as to extend through the housing 12.

In this particular embodiment, the housing 12 has four interconnections between adjacent panel members 16, 18 to join the four panel members 16, 18. Each interconnection is formed with a seam 24.

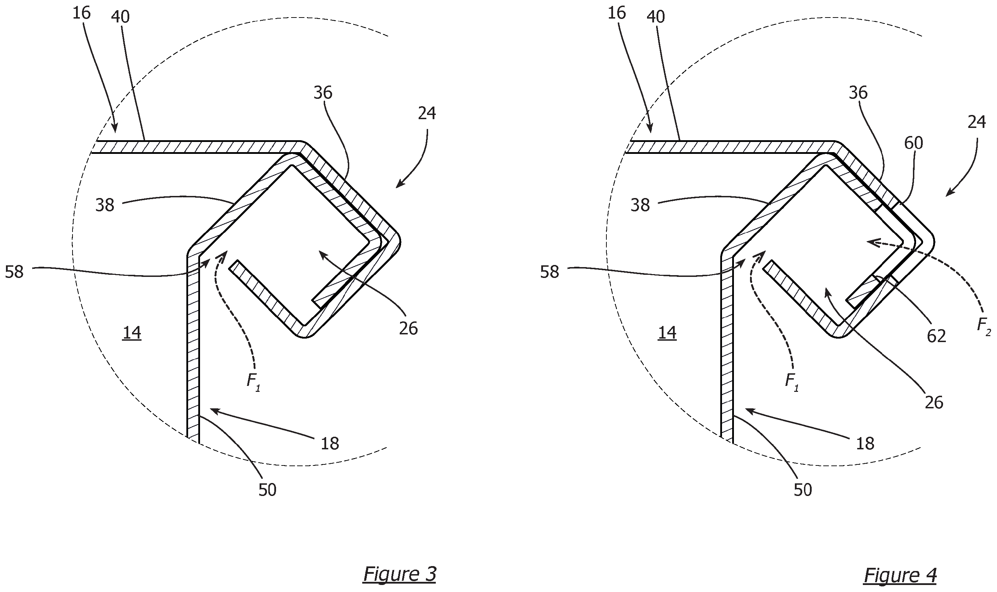

Figures 3 and 4 show transverse cross sections through one of the seams 24 of the housing 12. The seam 24 defines a seam channel 26 that is external to the passageway 14 of the housing 12. Further, the seam 24 is configured to allow slurry to flow into the seam channel 26. As will be understood by those skilled in the art, slurry that flows into the seam channel 26 will cure, resulting in the hardened material extending around the seams 24, and into the seam channels 26. In this way, the hardened material of the building element engages with at least the part of the housing 12 that is embedded (in other words, cast in) to that hardened material.

In the example of a floor slab that is formed using cast concrete, the firestopping device 10 facilitates formation of the penetration in the floor slab via the passageway 14. During the pouring process, the wet, uncured concrete slurry flows around the seams 24, and into the seam channels 26. As the concrete cures and hardens, the firestopping device 10 is effectively "anchored" into the concrete of the floor slab.

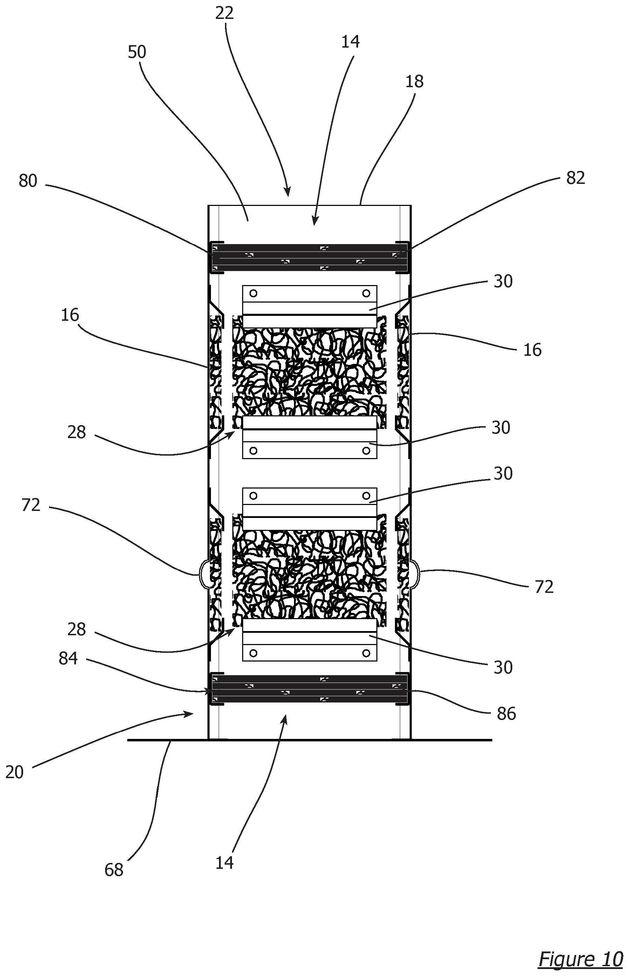

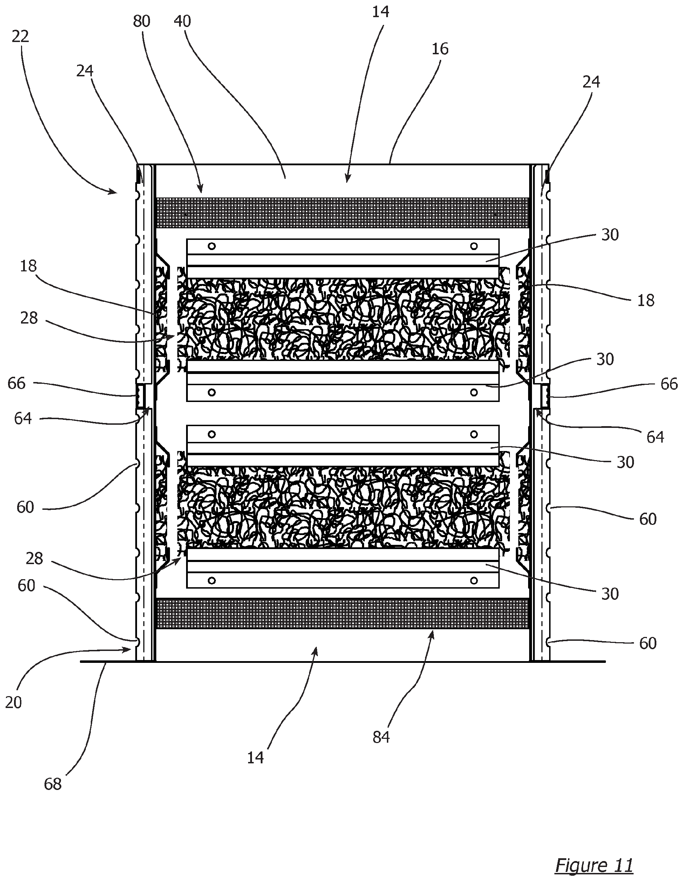

The firestopping device 10 also has intumescent material that is supported on the internal surface of the housing 12 with respect to the passageway 14. The intumescent material swells in response to heat. In this way, heat generated by a fire causes the intumescent material to swell. With appropriately selected and positioned intumescent material, the swelling of the intumescent material closes the passageway 14, and also surrounds service components installed through the passageway 14. As shown in Figures 10 and 11, the intumescent material is in the form of strips 28 that are retained against the internal surfaces of the panels 16, 18 by brackets 30.

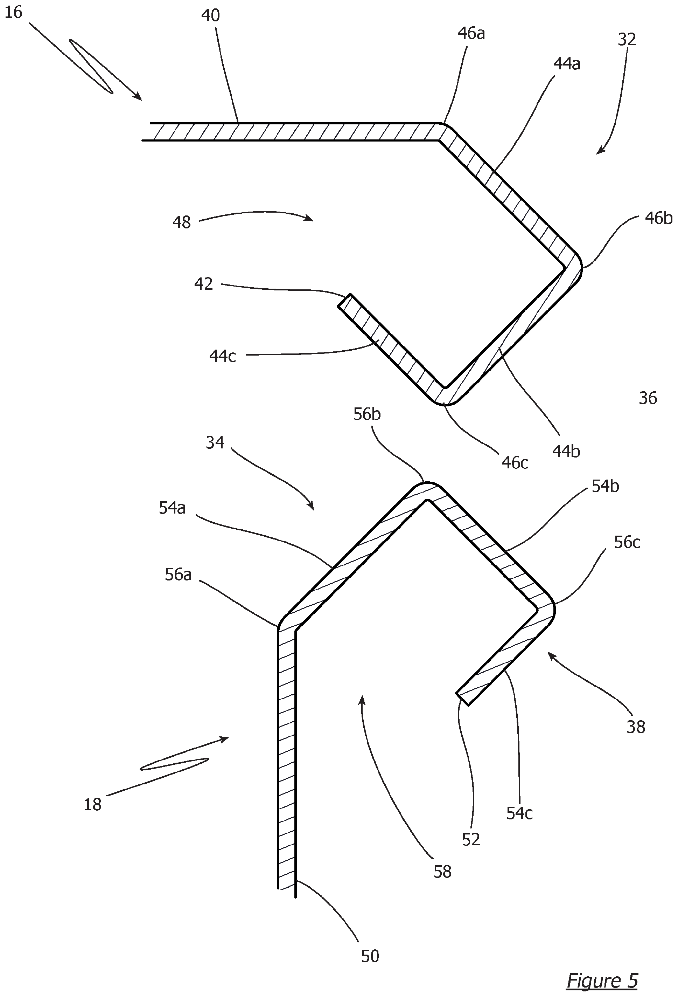

Each of the panel members 16, 18 has a hem formation along each of its lateral edge portions. Each seam 24 is formed by interlocking of two hem formations from adjacent panel members of the housing 12. Figure 5 illustrates one of the hem formations that is formed on a lateral edge portion 32 of one of the major panel members 16, and one of the hem formations that is formed on the lateral edge portion 34 of one of the side panel members 18.

In this particular example, the hem formations on the lateral edge portions 32 of the major panel members 16 are outer seam portions 36. The hem formations on the lateral edge portions 34 of the side panel members 18 are inner seam portions 38. The interlocking of the outer and inner seam portions 36, 38 is evident in Figures 3 and 4. In preferred forms of firestopping devices 10, the panel members 16, 18 are formed from sheet metal, such that the outer and inner seam portions 36, 38 can be created by various sheet metal operations.

Figure 5 shows portions of one of major panel members 16 and one of the side panel members 18 in end view. With respect to the portion of the major panel member 16, in Figure 5 there is shown one of the lateral edge portions 32, and part of the central portion 40 of the major panel member 16. Within the lateral edge portions 32 is a lateral edge 42 of the major panel member 16, and three flanges: an inner flange 44a that is adjacent central portion 40, an outer flange 44c that extends from the lateral edge 42, and an intermediate flange 44b that is between the inner and outer flanges 44a, 44c. Three folds 46a, 46b, 46c between the central portion 40 and the lateral edge 42 create the inner, intermediate, and outer flanges 44a, 44b, 44c. The widths of the inner, intermediate, and outer flanges 44a, 44b, 44c, together with the fold angles of the three folds 46a, 46b, 46c are such that there is a longitudinal gap 48 between the central portion 40 and the lateral edge 42. In this way, each of the outer seam portions 32 have an open loop formation. The longitudinal gap 48 is parallel with the longitudinal direction of the seams 24.

With respect to the portion of the side panel member 18, in Figure 5 there is shown one of the lateral edge portions 34, and part of the central portion 50 of that side panel member 18. Within the lateral edge portions 34 is a lateral edge 52 of the side panel member 18, and three flanges: an inner flange 54a that is adjacent central portion 50, an outer flange 54c that extends from the lateral edge 52, and an intermediate flange 54b that is between the inner and outer flanges 54a, 54c. Three folds 56a, 56b, 56c between the central portion 50 and the lateral edge 52 create the inner, intermediate, and outer flanges 54a, 54b, 54c. The widths of the inner, intermediate, and outer flanges 54a, 54b, 54c, together with the fold angles of the three folds 56a, 56b, 56c are such that there is a longitudinal gap 58 between the central portion 50 and the lateral edge 52. In this way, each of the inner seam portions 34 have an open loop formation.

As is evident from Figures 3 and 4, the geometries of lateral edge portions 32, 34 are such that each inner seam portion 38 is shaped to locate within the outer seam portion 36. Further, the geometries of lateral edge portions 32, 34 are inner seam portion 38 and outer seam portion 36 are to have a transition fit.

Each of the panel members 16, 18 has apertures 60, 62 within the respective lateral edge portion 32, 34. Further, the apertures 60, 62 are positioned so as to extend through the respective hem formation of the respective panel member 16, 18. Each of the major panel members 16 has two sets of apertures 60. Each set is arranged in a line that parallel with the adjacent lateral edge 42. Similarly, each of the side panel members 18 has two sets of apertures 62. Each set is arranged in a line that parallel with the adjacent lateral edge 52. When the major and side panel members 16, 18 are assembled to form the housing 12, apertures 60, 62 align in the longitudinal direction of the housing 12.

When slurry is being poured to construct the building element around the firestopping device 10, slurry is able to flow into the seam channel 26 through the longitudinal gaps 48, 58. In Figures 3 and 4, this flow of slurry is indicated by arrows *F₁*. Further, as the level of the slurry being poured around the firestopping device 10 rises, slurry is also able to flow into the seam channel 26 through the respective aligned apertures 60, 62, as indicated by arrow *F₂* in Figure 4.

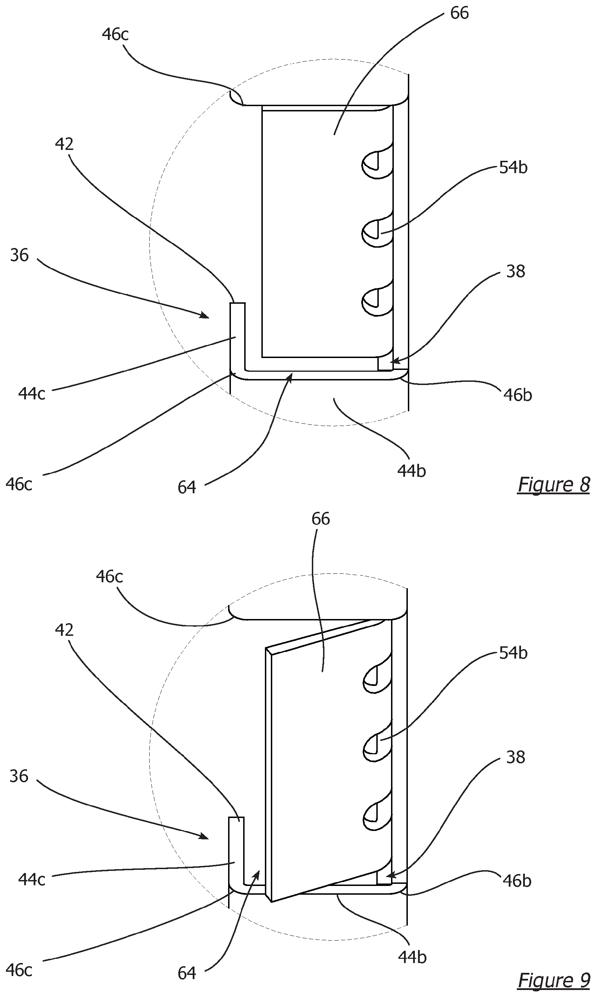

Each seam 24 is formed with an alignment slot 64 in the outer seam portion 36, and a locking tab 66 in the inner seam portion 38. The alignment slot 64 and the locking tab 66 align with one another when the respective panel members 16, 18 are in predetermined longitudinal alignment with one another, as shown in Figure 8. When the locking tab 66 is in initial position shown in Figure 8, the locking tab 66 does not interfere with sliding movement of the inner seam portion 38 within the outer seam portion 36. Bending the locking tab 66 from the initial position to a deflected position so as to project through the aligned alignment slot 64 creates an interference between the locking tab 66 and the material of the outer seam portion 36 that surrounds the locking tab 66. This interference inhibit disassembly of the interconnection. To this end, the outer and inner seam portions 36, 38 are impeded from the relative sliding movement by which the respective panel members 16, 18 are assembled.

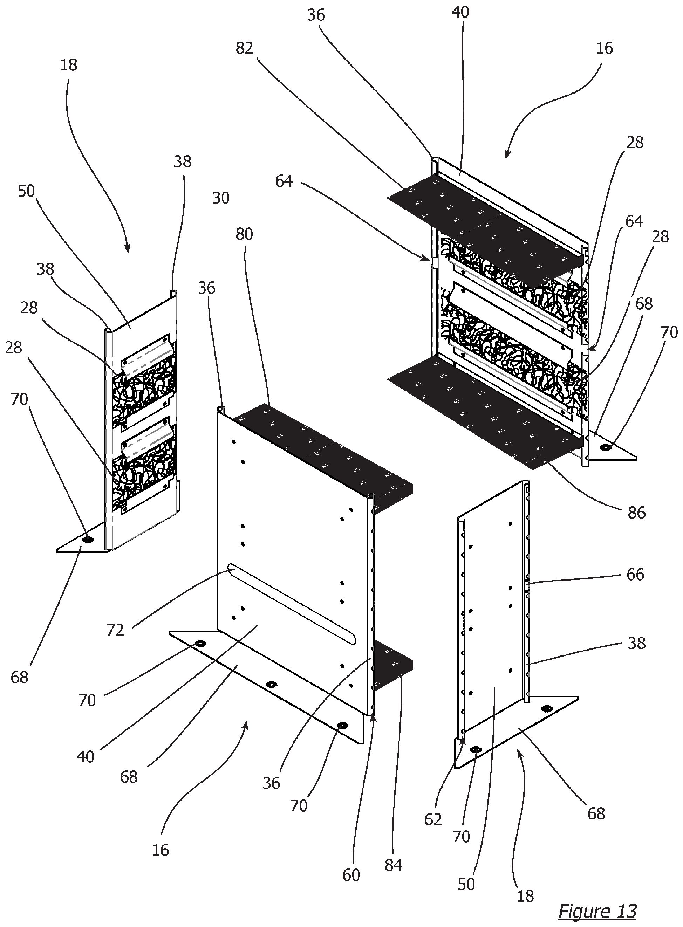

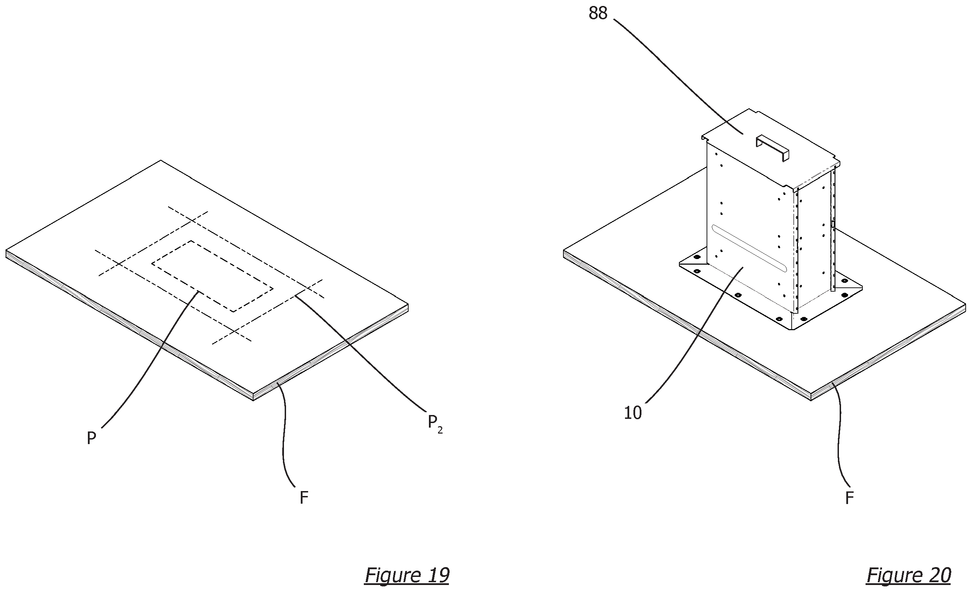

The housing 12 includes mounting flanges 68 that project outwardly with respect to the passageway 14. The mounting flanges 68 provide a base at the first longitudinal end 20 of the firestopping device 10. Each of the mounting flanges 68 includes holes 70 for use in securing the firestopping device 10 to formwork, as discussed further in connection with Figures 19 to 23. As will be evident from Figure 13, each panel member 16, 18 has a respective mounting flange 68 extending generally orthogonally to the central portion 40, 50 in the opposite direction to the internal surface. Further, each of the mounting flanges 68 is formed from the same piece of material as the respective central portion 40, 50. In this way, each mounting flange 68 and the respective central portion 40, 50 are formed from a continuous piece of sheet material, which prevents slurry penetrating the passageway 14 beneath the respective central portion 40, 50.

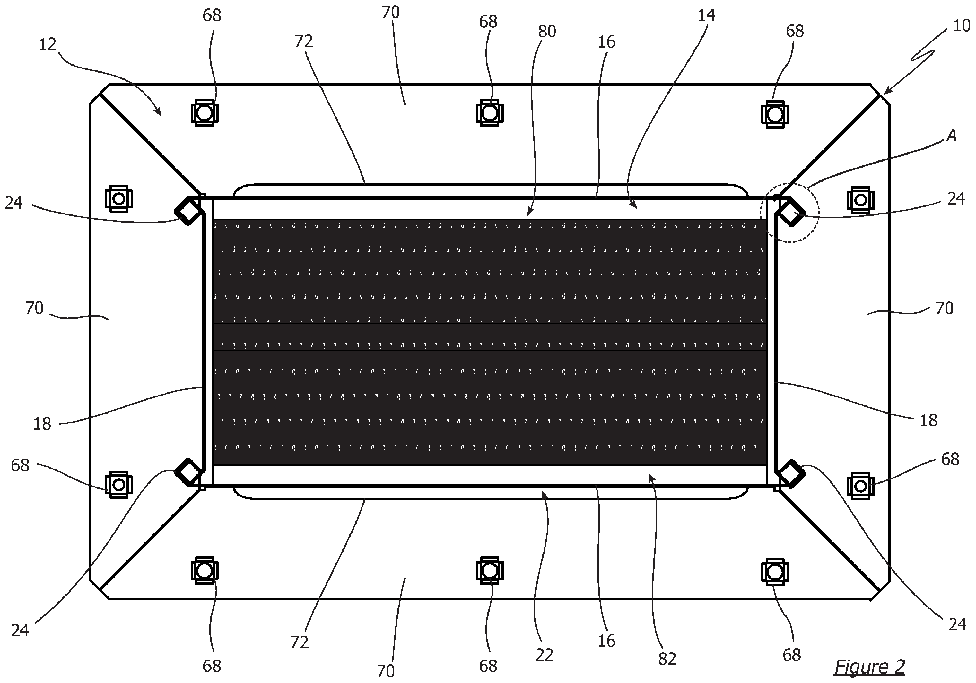

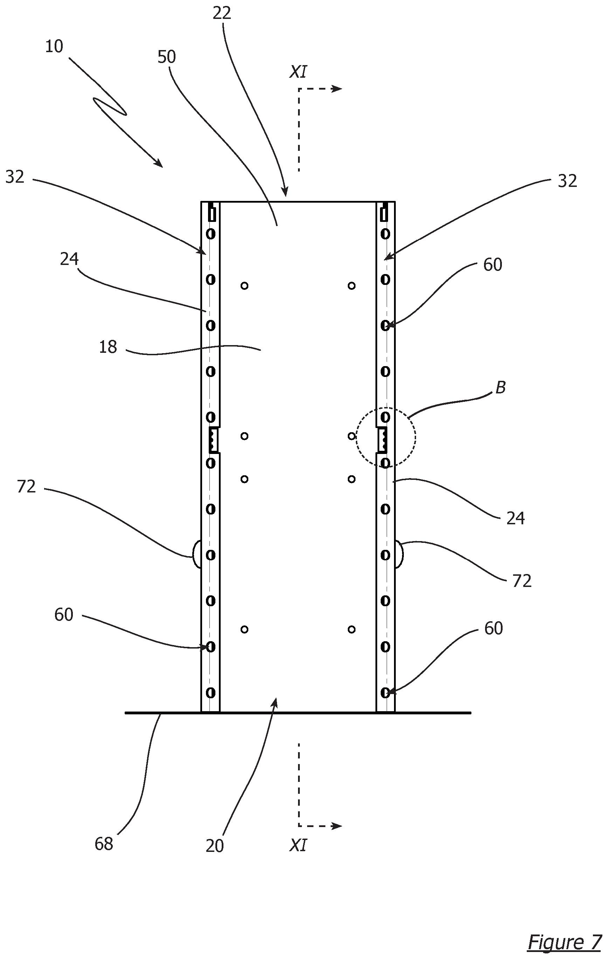

The firestopping device 10 includes rib formations 72 within the sheet material of the major panel members 16. The rib formations 72 are shaped to provide resistance to pressure-induced deformation of the major panel members 16, for example, when the housing 12 is subjected to hydrostatic forces from the slurry. Further, the hardened material of the building element surrounding the rib formations 72 increases the engagement of the housing 12 with that hardened material. As shown particularly in Figures 2 and 7, the rib formations 72 project outwardly with respect to the passageway 14. In addition, the rib formations 72 have a length direction that is generally orthogonal to the longitudinal direction of the housing 12.

For the purposes of this specification, and the claims that follow, the term "pressure-induced deformation" is to be understood to refer to the behaviour of a sheet material that is supported on multiple edges, when subjected to pressure (such as hydrostatic pressure) that results in the sheet material bending away from the applied pressure, with the extent of bending increasing with distance from the supported edges.

It will be appreciated that additional rib formations may be provided to the housing 12. These may be provided at different separations from the first longitudinal end 20 of the housing 12, project inwardly with respect to the passageway 14, extend wholly or partially at non-orthogonal directions across the central portions 40 of the major panel members 16, and/or be non-linear.

The firestopping device 10 includes dividers to inhibit passage of smoke through the passageway 14. In this particular embodiment, the firestopping device 10 has a first divider that is arranged at the first longitudinal end 20, and a second divider that is arranged at the second longitudinal end 22. The first and second dividers are configured for the service components to extend through the passageway 14, whilst surrounding the service components at the respective longitudinal end 20, 22.

In this particular example, the upper divider is in the form of two sets of bristles 80, 82. The bristles in each set 80, 82 project partially across the passageway 14 at the first longitudinal end 20. Further, the two sets of bristles 80, 82 overlap one another. Similarly, the lower divider is in the form of two sets of bristles 84, 86. The bristles in each set 84, 86 project partially across passageway 14 at the second longitudinal end 18, with the two sets of bristles 84, 86 overlapping one another.

Each set of bristles 80, 82, 84, 86 is mounted within a channel that is secured to the internal surface of a respective one of the major panel members 16.

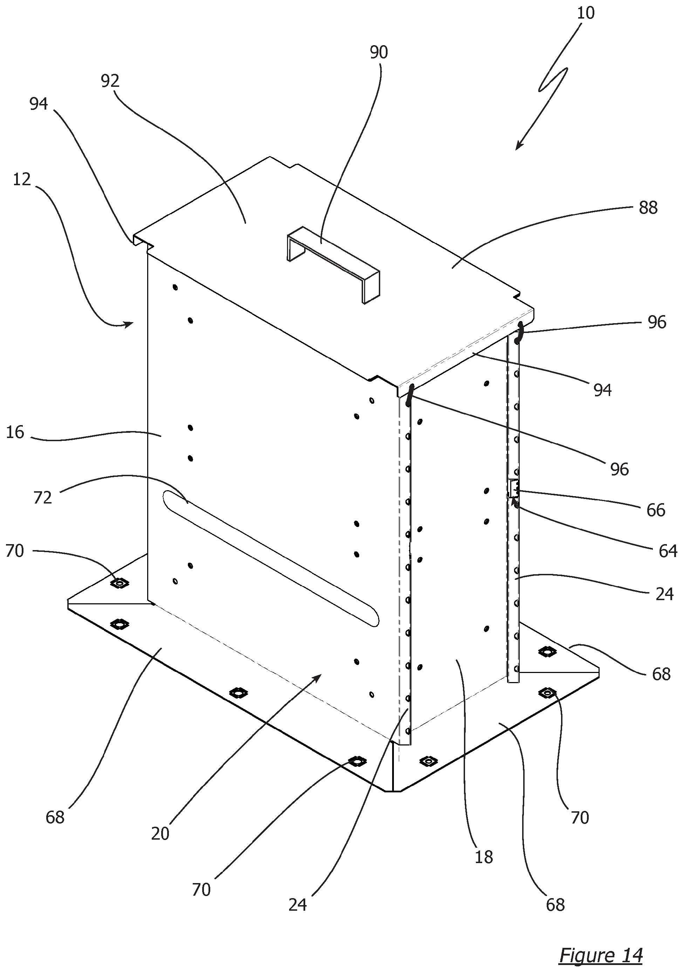

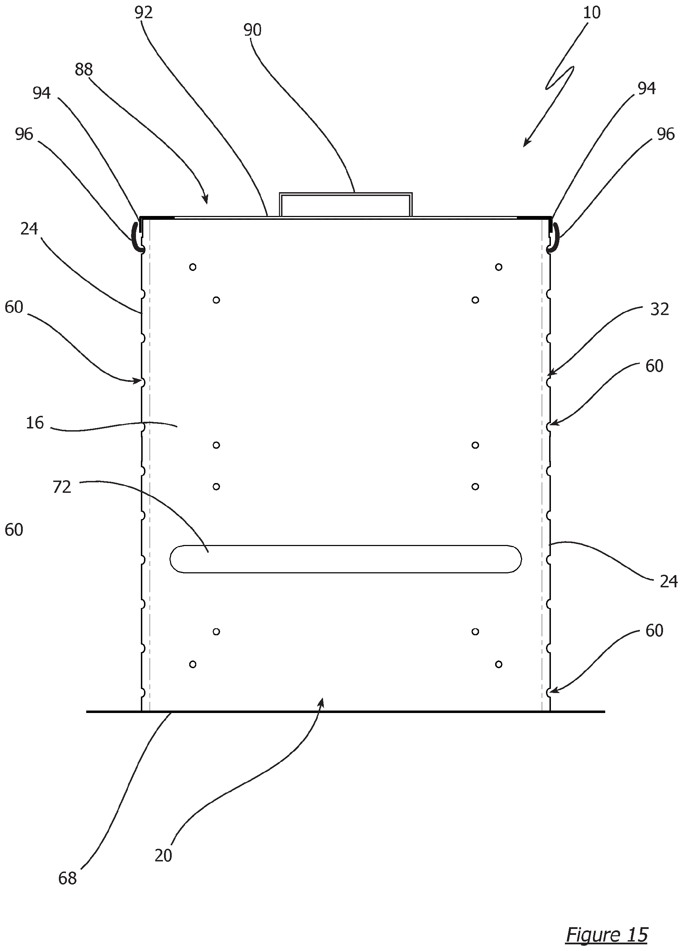

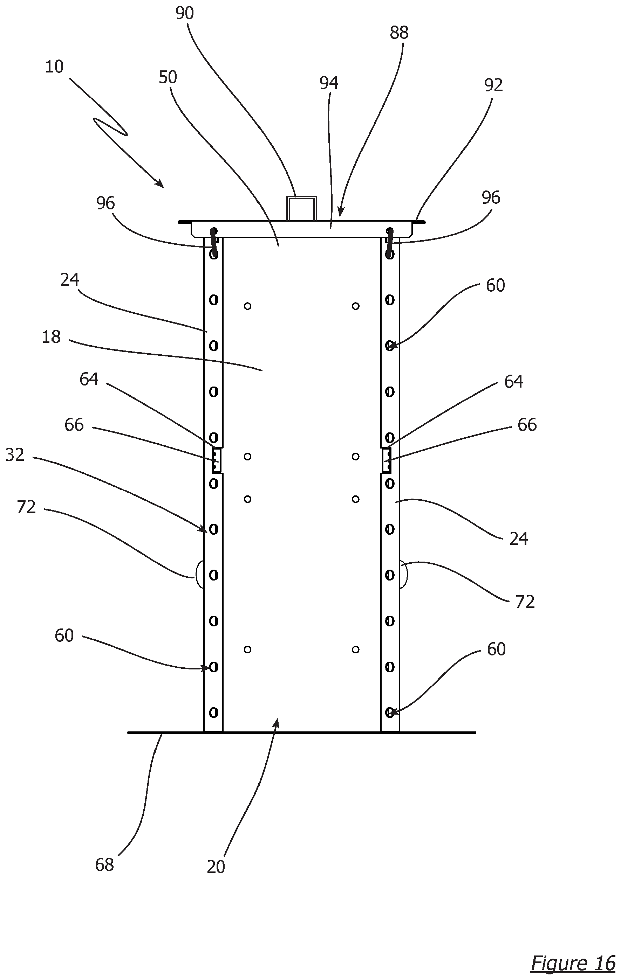

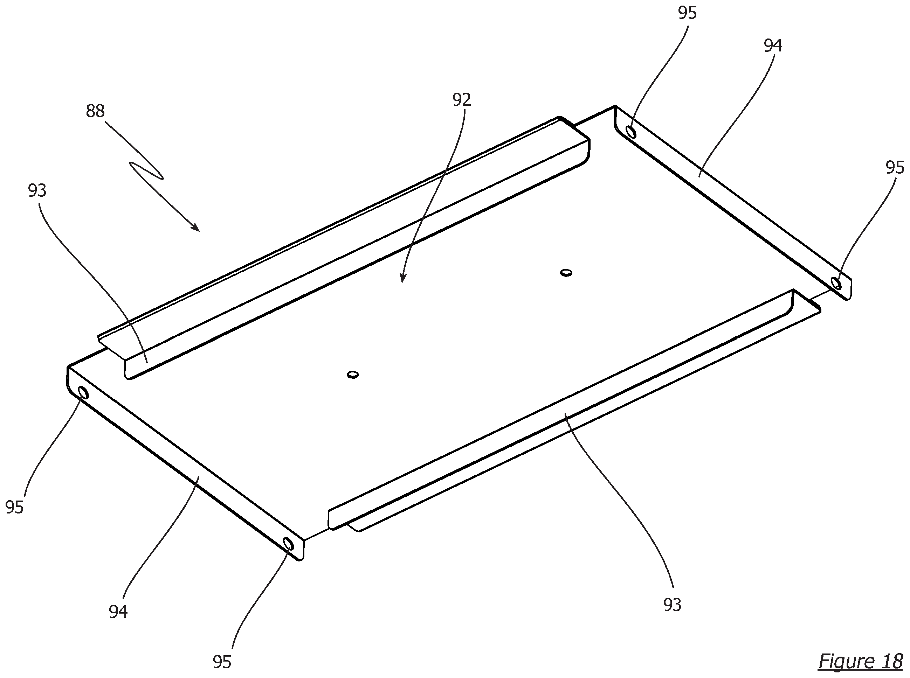

Figures 14 to 17 illustrate the firestopping device 10 with a lid 88 that covers the second longitudinal end of the passageway 14. Figure 18 shows the underside of lid 88. When pouring the slurry to form the building element, the lid 88 blocks slurry from entering the passageway 14. The lid 88 can include a handle 90 to assist with removing the lid from housing 12. In addition, by releasably securing the lid 88 to the housing 12, the handle 90 can be used to lift the firestopping device 10, for example from a transport vehicle onto the building site.

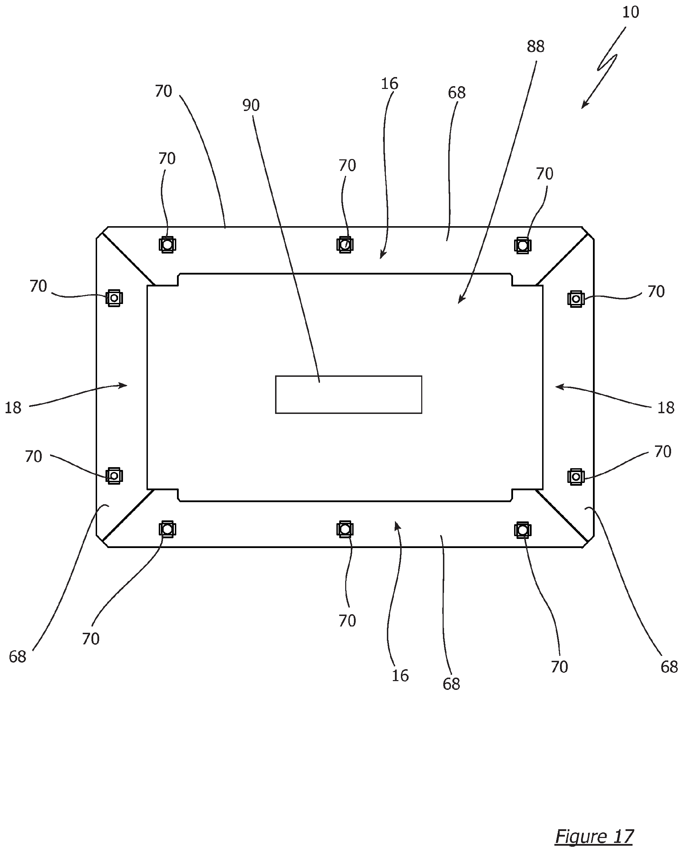

In this particular example, the lid 88 includes a planar primary section 92 that has a periphery that is dimensioned in at least one direction to be larger than the cross section of the passageway 14, as will be evident from Figure 17. The lid 88 has flanges that each project downwardly from way from the handle side of the primary section 92. When the lid 88 is fitted to the housing 12, the flanges locate the lid 88 with respect to the passageway 14.

The lid 88 has a pair of inner flanges 93 that are positioned to be in contact with internal surfaces of the housing 12 at the second longitudinal end 22, when the lid 88 is fitted to the housing 12. The pair of the inner flanges 93 are set inwardly from the longer edges of the planar primary section 92, so as to contact inner surfaces of the major panel members 16.

In addition, the lid 88 has a pair of outer flanges 94 that are positioned to be in contact with external surfaces of the housing 12 at the second longitudinal end 22, when the lid 88 is fitted to the housing 12. As shown in Figures 17 and 18, the outer flanges 94 are adjacent the shorter peripheral edges of the planar primary section 92, so as to be in contact with the seams 24. As is also shown in Figures 17 and 18, the lid 88 has holes 95 in the outer flanges 94. Ties 96 can be passed through the holes 95 in the outer flanges 94, and through apertures 60, 62 in the seams 24 to releasably attaching the lid 88 to the housing 12.

Figures 19 to 23 schematically illustrate stages in forming a building element, such as a concrete slab S. As shown in Figure 19, formwork F is constructed, and the intended position P of the penetration for services in the slab is marked on the formwork F. As the periphery of the firestopping device 10 defined by the mounting flanges 68 is dimensionally larger than the penetration, the intended position of the firestopping device 10 can optionally also be marked on the formwork F (as indicated by dashed lines P₂ surrounding the position P).

The firestopping device 10, together with the lid 88 secured to the second longitudinal end 22, is then positioned at the intended position P for the penetration, as shown in Figure 20. To avoid slurry from passing between the mounting flanges 68 and formwork F, the firestopping device 10 is then secured to the formwork F by installing appropriate fasteners through the holes 70 in the mounting flanges 68.

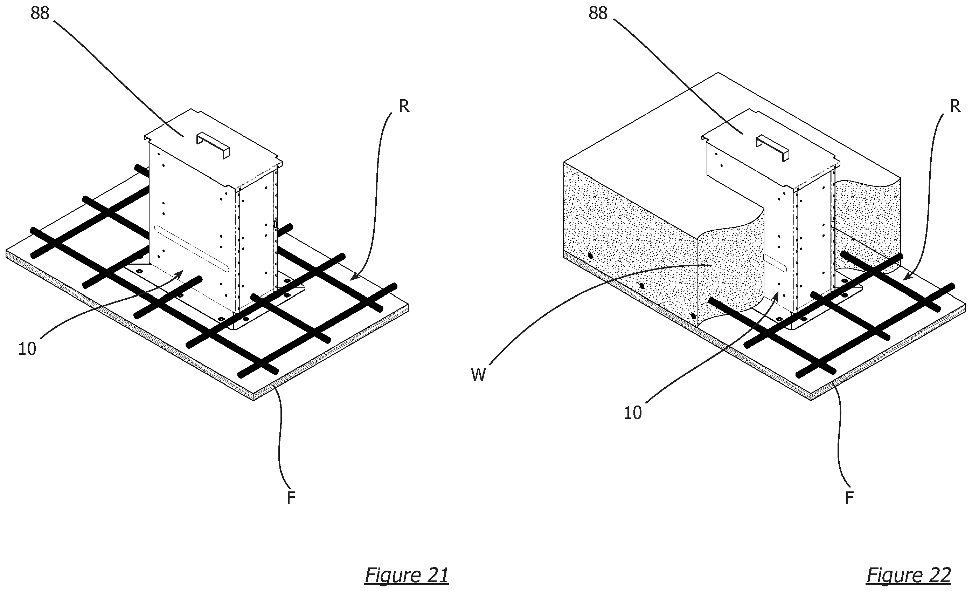

As shown in Figure 21, reinforcing materials R are then installed above the formwork F and around the firestopping device 10, as required.

When the formwork F is assembled, and the reinforcing materials R installed, concrete slurry W is then poured, as indicated in Figure 22. With the concrete slurry W in the wet, flowable state, the slurry flows around housing 12 of the firestopping device 10, penetrating into the seams 24 as previously described, and around the rib formations 72. The concrete slurry is then left to cure and harden.

As will be understood by those skilled in the art, the housing 12 is subjected to forces, including hydrostatic forces, during the slurry pour, and also while the concrete is curing. Those hydrostatic forces are applied by the slurry on external surfaces the housing 12. A consequence of these forces is that the central portions 40, 50 of the panel members 16, 18 deflect generally inwardly towards the passageway 14. With the lid 88 fitted to the housing 12 at the second longitudinal end 22, the inner flanges 93 support the major panel members 16 so as to provide resistance to the inward deflection, at least in the region of the second longitudinal end 22. The ties 96 attaching the lid 88 to the housing 12 aid in retaining the lid 88 in the fitted position.

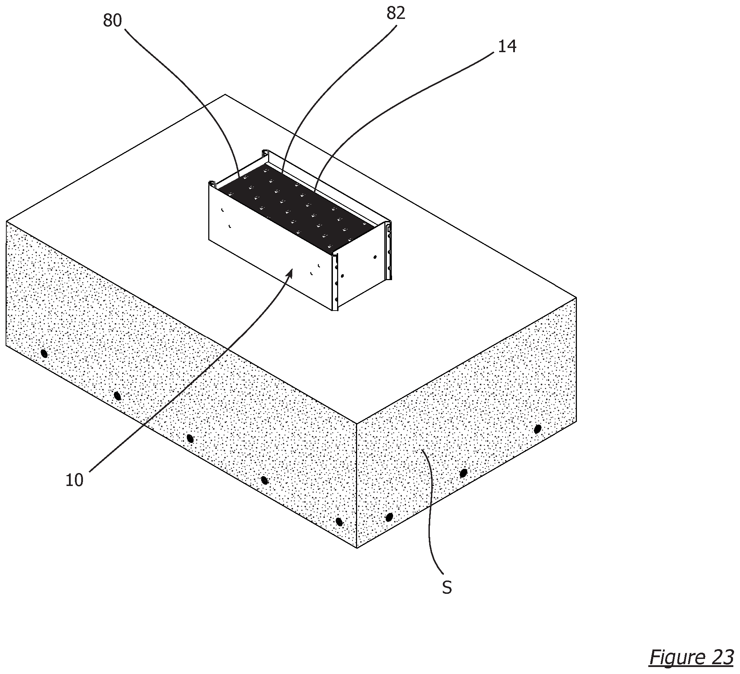

Once sufficiently cured, the concrete slab S is formed with the firestopping device 10 embedded within the hardened material, and with the passageway 14 providing a penetration for service components. The formwork F can then be removed from the concrete slab S, as shown in Figure 23. At an appropriate time, the lid 88 can be removed from the housing 12 allowing access to the passageway 14 via the second longitudinal end 22.

As shown in Figures 10 and 11, the brackets 30 that support the strips 28 of intumescent material have a length direction that is transverse to the longitudinal direction of the passageway 14. It may be noted that in certain examples, the brackets 30 may also support the panel members 16, 18 so as to provide resistance to inward deflection that is induced by hydrostatic forces.

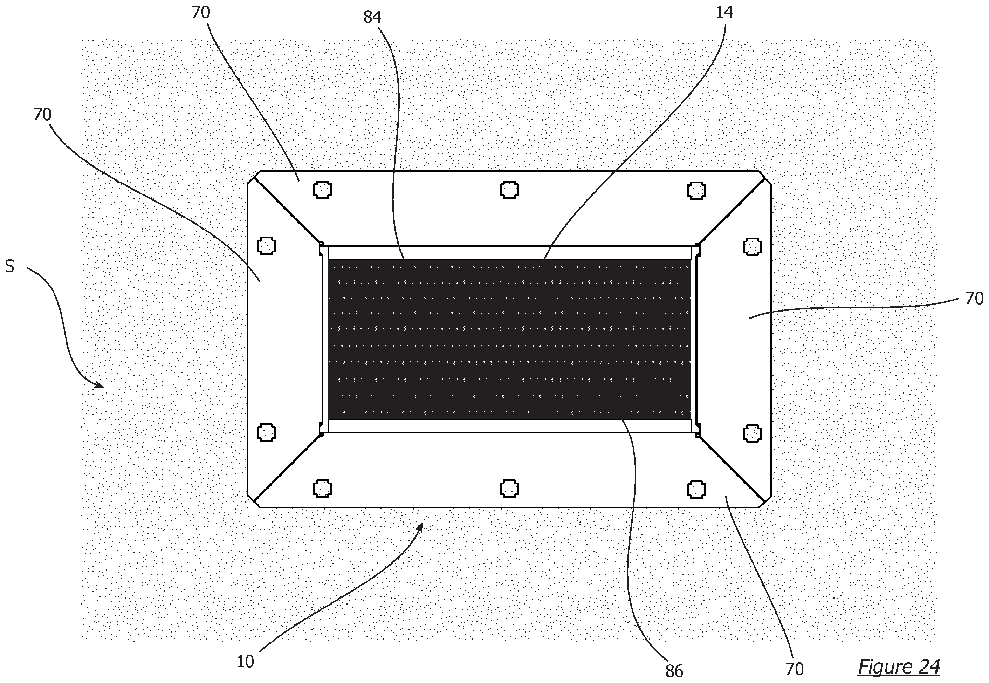

Figure 24 shows an underside view of the concrete slab S, and the embedded firestopping device 10. The mounting flanges 68 are formed to allow small parts of the sheet material that defines holes 70 to break away when the formwork F is removed. This helps to maintain the connection of the mounting flanges 68 with the concrete slab S.

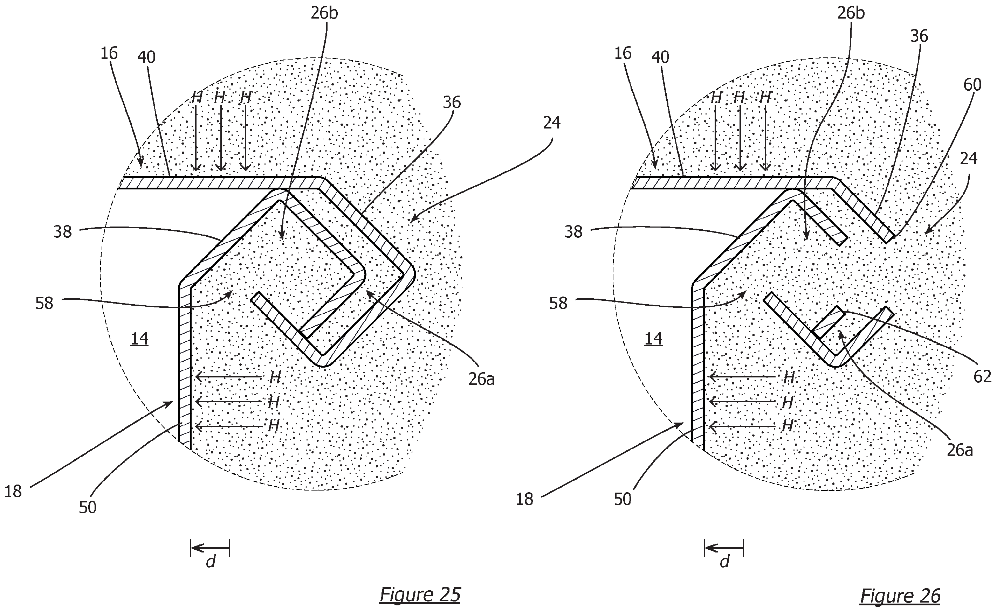

The interconnections that are formed at the seams 24 permit limited relative displacement of at least part of the inner seam portion 38 within the outer seam portion 36. This is shown in Figures 25 and 26, in which the extent and direction of displacement of the inner seam portion 38, relative to its position as shown in Figures 3 and 4, is indicated by arrow *d* in each of Figures 25 and 26. In this way, a cavity is created between the inner and outer seam portions 36, 38 into which slurry is able penetrate.

The displacement of the inner seam portion 38 is limited by abutment of the lateral edge 52 of the respective side panel member 18 with the outer flange 44c of the outer seam portion 36. The displacement causes the seam channel to be partially separated into two regions 26a, 26b, as shown in Figures 25 and 26. The cavity that is created between the inner and outer seam portions 36, 38 corresponds with region 26a in Figures 25 and 25.

The apertures 62 in the inner seam portion 38 allow the cured concrete S to extend between the two regions 26a, 26b.

As described above, the panel members 16, 18 are subjected to forces, including hydrostatic forces, during the slurry pour, and also while the concrete is curing. Hydrostatic forces act on the panel members 16, 18 in directions as indicated by arrows H in Figures 25 and 26. These forces act to displace parts of the inner seam portions 38 of the seams 24 within their respective outer seam portion 36, as described. Any deflection of the central portions 40, 50 that occurs when the housing 12 is subjected to hydrostatic forces may enhance engagement of the inner and outer seam portions 36, 38 of the respective interconnection, and/or engagement of inner seam portions 38 with the internal face of the respective major panel member 16.

It will be appreciated that various conditions may impede displacement of parts of the inner seam portion 38 within the outer seam portion 36, along the length of the respective seam 24. By way of example only, during the construction of the concrete slab S, the firestopping device 10 is secured to the formwork F at the mounting flanges 68. Securing the firestopping device 10 in this way will constrain the position of the mounting flanges 68, which will impede displacement of the inner seam portions 38 within the outer seam portions 36 at the first longitudinal end 20.

Notwithstanding the displacement and deflection described above, the seams 24 cooperate to inhibit penetration of slurry into the passageway 14 from around the housing 12.

Figures 25 and 26 also illustrate the penetration of the slurry into the seam channels 26 through the longitudinal gaps 48, 58, and through apertures 60, 62. This penetration of slurry is in addition to the concrete material of the slab S surrounding the housing 12, including the seams 24.

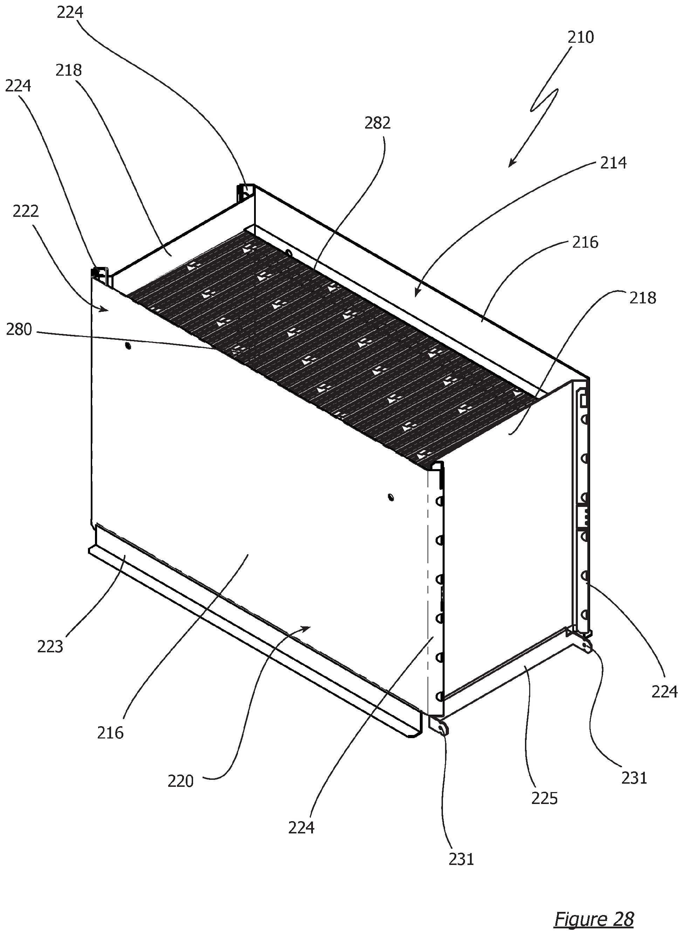

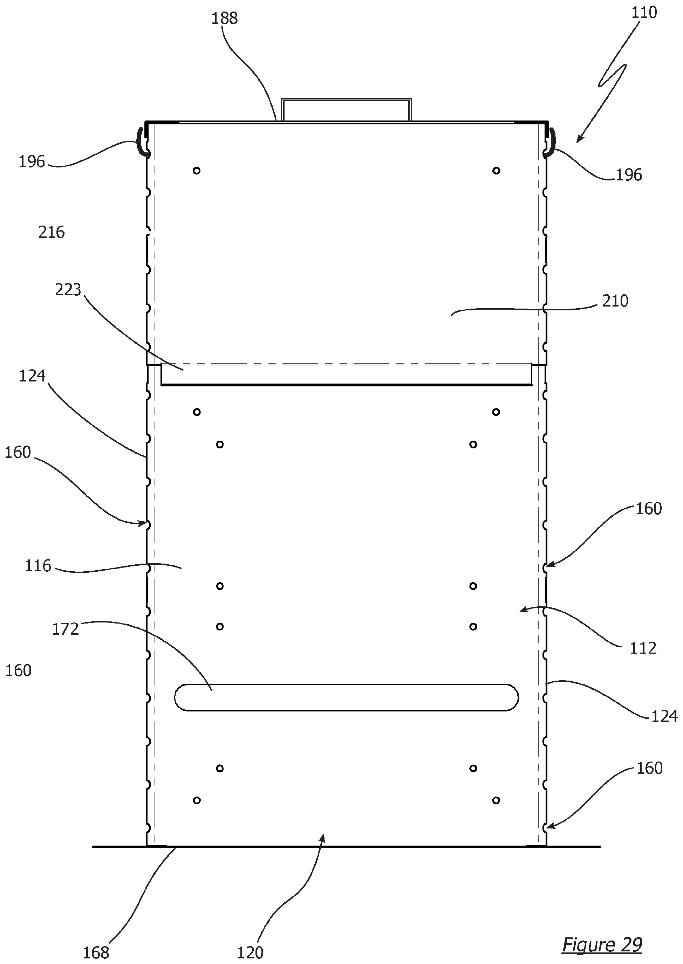

Figures 28 to 32 show a firestopping device 110 according to a second embodiment. Parts of the firestopping device 110 that are the same or similar to parts of the firestopping device 10 have the same reference numbers with the prefix "1" and for succinctness, will not be described again.

The firestopping device 110 includes an extension sleeve 210 that is secured to the second longitudinal end 122 of the housing 112. Compared with the firestopping device 10, the firestopping device 110 has a longer passage surrounding service components that are to extend through the firestopping device 110. This may be beneficial where the building element is to be of greater thickness, and it is desirable for the overall length of the firestopping device to be longer.

The extension sleeve 210 has panel members that are formed of sheet material. In this particular embodiment, the extension sleeve 210 has four panel members: two major panel members 216, and two side panel members 218. The panel members 216, 218 are joined by interconnections to define a passageway 214. The extension sleeve 210 has a first longitudinal end 220, and a second longitudinal end 222.

As will be evident from the Figures, the passageway 214 has a cross-sectional form to the passageway 114 that is defined by the housing 112. Further, the passageways 114, 114 align in the longitudinal directions such that service components can be passed through the passageways 114, 214 via either the longitudinal end 120 of the housing 112, or the second longitudinal end 222 of the extension sleeve 210.

In this particular embodiment, the extension sleeve 210 has four interconnections between the adjacent panel members 216, 218 to join the four panel members 216, 218. Each interconnection is formed with a seam 224.

The two major panel members 216, the two side panel members 218, and the four seams 224 are configured to have substantially similar geometries in the with the panel members 116, 118, and the seams 124.

The extension sleeve 210 has skirting portions 223, 225 at the first longitudinal end 220, which extend at least partially in a direction parallel with the longitudinal direction of the extension sleeve 210. Each skirting portion 223, 225 is shaped such that when the extension sleeve 210 is secured to the housing 112, the skirting portions 223, 225 overlap with the panel members 116, 118 at the second longitudinal end 122 of the housing 112. In this way, the skirting portions 223, 225 form a barrier to inhibit slurry penetrating the firestopping device 110 at the interface between the housing 112 and the extension sleeve 210.

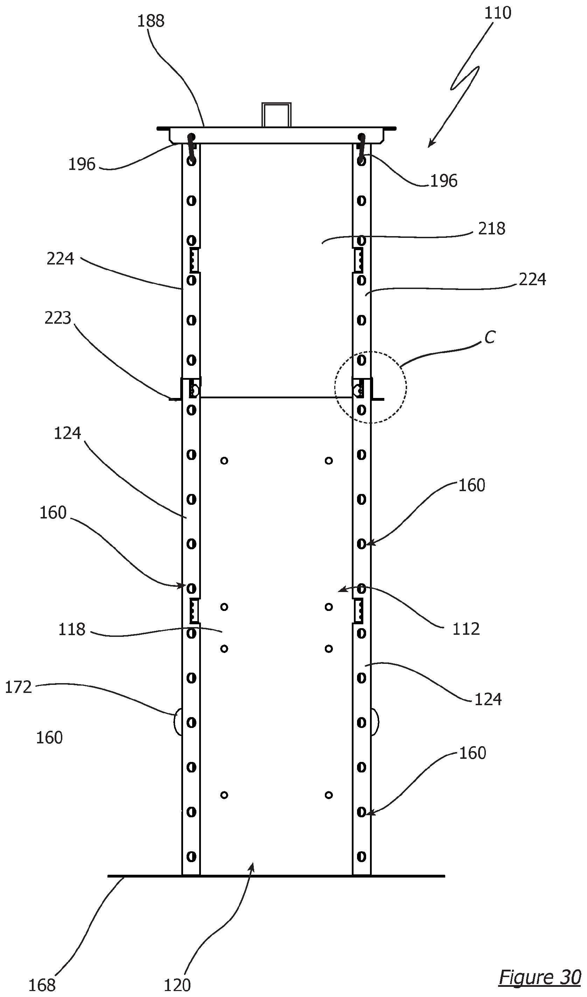

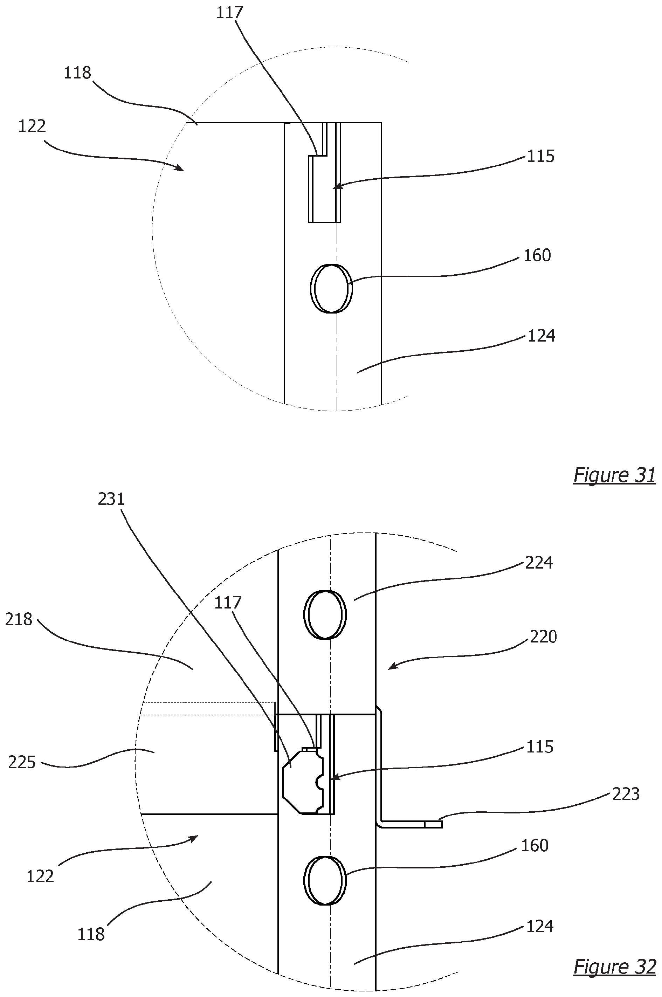

Figure 31 is an enlargement of Region C in Figure 30, showing the firestopping device 110 without the extension sleeve 210 secured to the housing 112. Each seam 124 includes a connection slot 115, which has a narrow portion that opens at the upper end of the seam 124 at the second longitudinal end 122 of the housing 112, and a broad portion is spaced from the upper end of the seam 124 by the narrow portion. The seam 124 forms a shoulder 117 between the narrow and broad portions of the connection slot 115.

As shown most clearly in Figure 28, each of the skirting portions 225 has a pair of connection tabs 231 that projects transversely to the respective skirting portion 225. Figure 28 shows the connection tabs 231 in their initial configurations, prior to the extension sleeve 210 being secured to the housing 112. With the connection tabs 231 in the initial configurations, the extension sleeve 210 and housing 112 are able to mate with one another such that the passageways 114, 214 are aligned, and the skirting portions 223, 225 overlap with the panel members 116, 118. As the extension sleeve 210 and housing 112 are mated in this way, the connection tabs 231 pass into the connection slots 115 at the upper ends of the seams 124. When properly mated, each connection tab 231 is aligned with the broad portion of the respective connection slot 115, and is below the level of the respective shoulder 117. Each of the four connection tabs 231 can then be bent to a deflected configuration, which is shown in Figure 32. In this deflected configuration, each respective connection tab 231 is deflected away from the narrow portion of the respective connection slot 115. The shoulder 117 is then between the connection tab 231 and the upper end of the seam 124, such that the seam 124 blocks movement of the connection tab 231 out of the respective connection slot 115. In this way, the extension sleeve 210 is secured to the housing 112 in the assembled firestopping device 110.

Skirting portions 223 are formed of the same sheet of material as the two major panel members 216. Hence, when the extension sleeve 210 is secured to the housing 112, each skirting portion 223 overlaps with a respective one of the major panel members 116. Skirting portions 225 are formed of the same sheet of material as the two side panel members 218. Hence, when the extension sleeve 210 is secured to the housing 112, each skirting portion 225 overlaps with a respective one of the side panel members 118.

The extension sleeve 210 includes a divider to inhibit passage of smoke through the passageway 214, and hence through the firestopping device 110. The divider is arranged at the second longitudinal end 222 of the extension sleeve 210.

In this particular example, the divider in the extension sleeve 210 is in the form of two sets of bristles 280, 282. The bristles in each set 280, 282 project partially across the passageway 214, and overlap one another. Each set of bristles 280, 282 is mounted within a channel that is secured to the internal surface of a respective one of the major panel members 216.

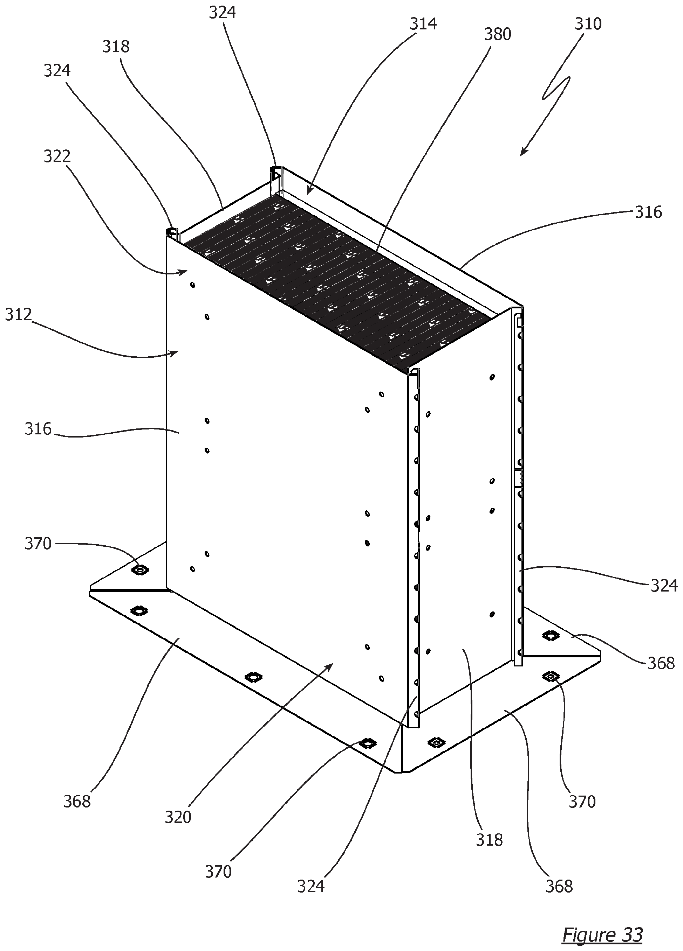

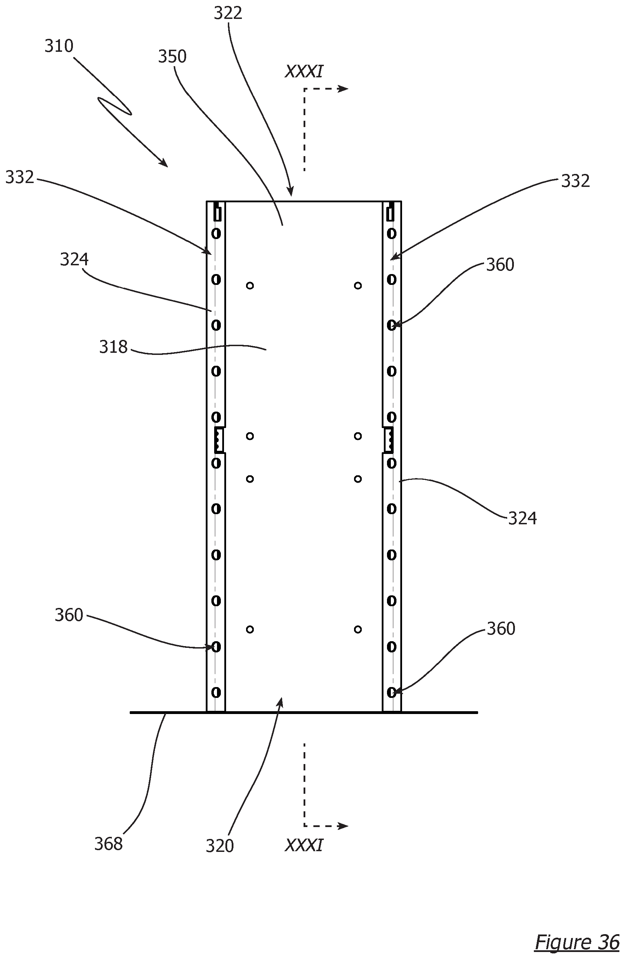

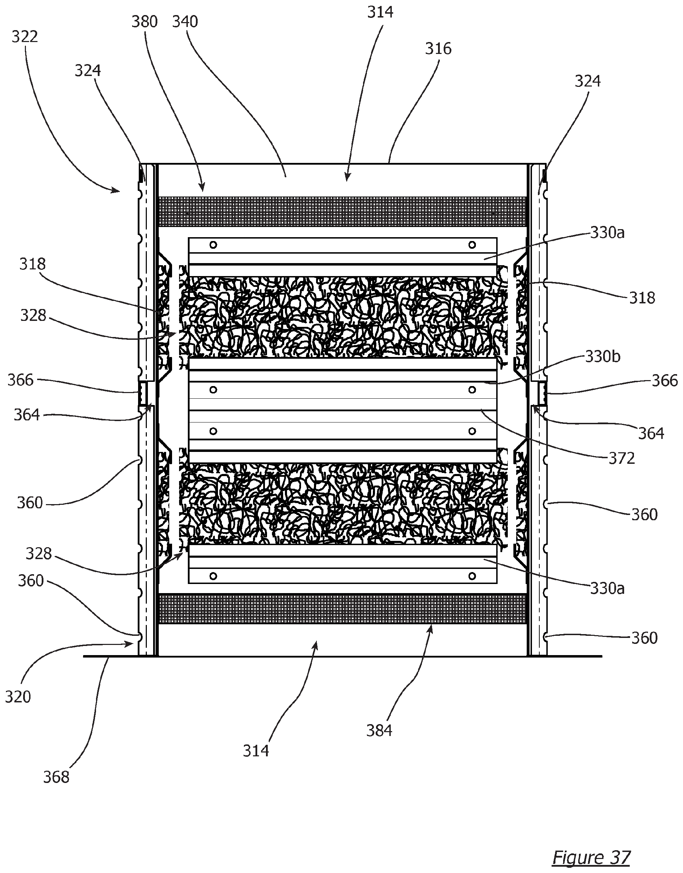

Figures 33 to 37 show a firestopping device 310 according to a third embodiment. Parts of the firestopping device 310 that are the same or similar to parts of the firestopping device 10 have the same reference numbers with the prefix "3" and for succinctness, will not be described again.

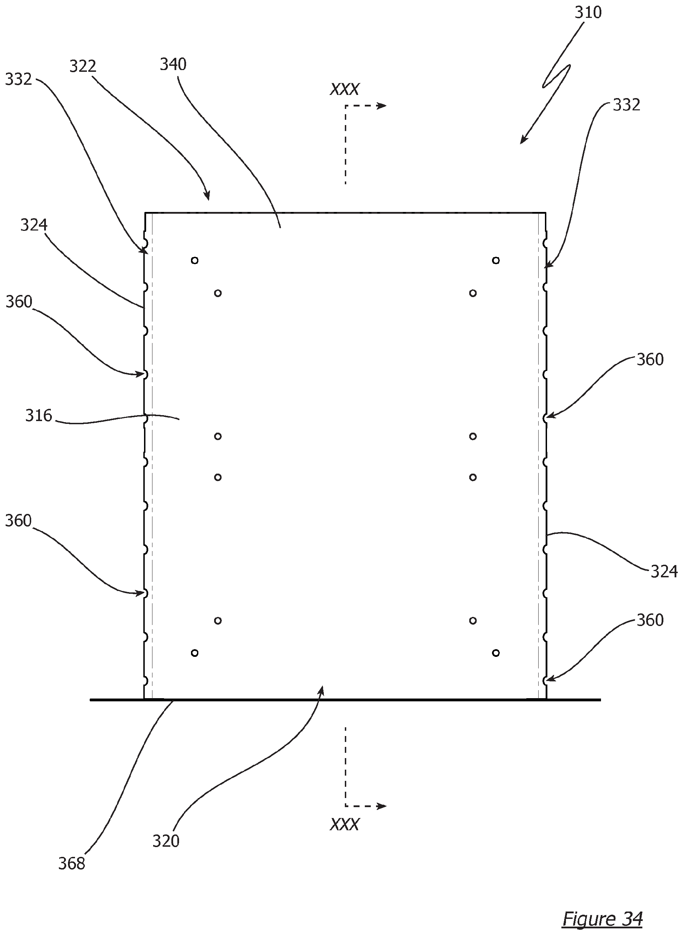

The firestopping device 10 and firestopping device 310 differ primarily in the manner in which the major panels members of the housing are supported to resist pressure-induced panel distortion when the housing is subjected to hydrostatic forces from the slurry. It will be evident from Figures 33 and 34 that the housing 312 of the firestopping device 310 does not include rib formations in the major panel members 316. Rather, the brackets that support the strips 328 of intumescent material provide resistance to pressure-induced deformation of the major panel members 316, as described below.

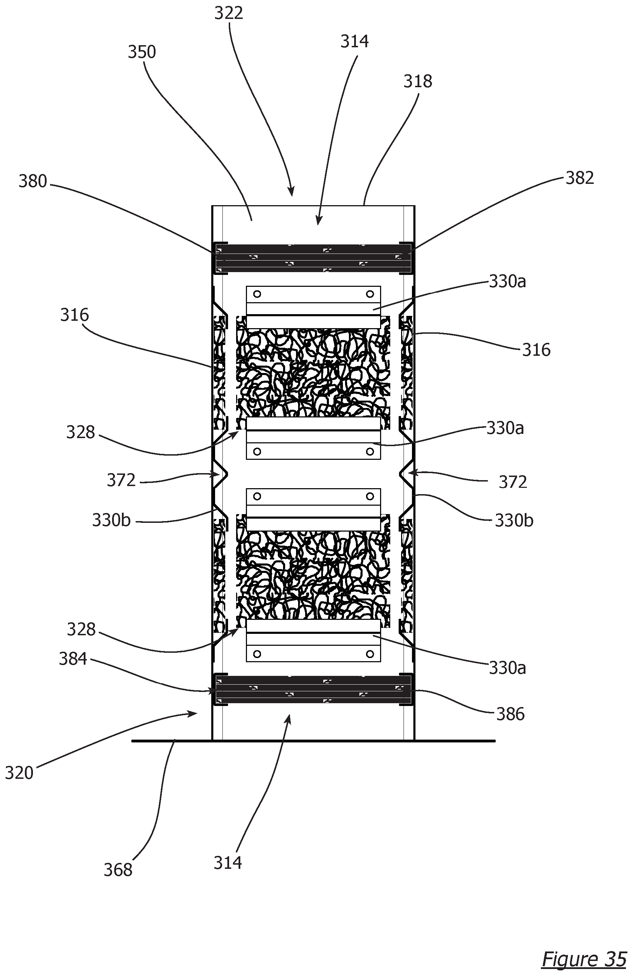

The firestopping device 310 has two sets of four strips 328 of intumescent material. In each set, one of the four strips 328 is retained against a respective one of the two major panel members 316 and the two side panel members 318. As shown in Figure 35, the strips 328 of intumescent material are retained against the internal surfaces of the panel members 316, 318 by brackets.

Each of the major panel members 316 has a pair of first brackets 330a, and a second bracket 330b. Each of the two strips 328 on each major panel member 316 are supported by the two first brackets 330a, and also by the second bracket 330b.

Each of the two side panel members 318 has four first brackets 330a, that are arranged in pairs. Each of the two strips 328 on each side panel member 318 are supported by one of the two pairs of brackets 330a.

The second brackets 330b include a central rib formation 372 that has a length direction that is generally orthogonal to the passageway 314. The central rib formation 372 has a V-shape, with the apex located inwardly of the respective major panel member 316, having regard to the passageway 314. In this way, the second brackets 330b have the combined function of providing support to resist pressure-induced deformation of the major panel members 16, and retaining the strips 28 against the internal surfaces of the major panel members 316.

In some alternative examples, the firestopping device can include one or more separate support members that each provide support to resist pressure-induced deformation of one or more of the panel members. In some examples, the support members include a rib formation that projects in a direction generally normal to the respective panel members surface.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

## Claims

1. A firestopping device for a penetration in a building element that is constructed with a curable material, the firestopping device comprising:
a housing having:
two or more panel members that are formed of sheet material, the panel members being joined by interconnections to define a passageway that extends between first and second longitudinal ends, whereby when the firestopping device is installed in a building, service components are to extend through the passageway, and
one or more of the interconnections being formed with a seam that extends longitudinally with respect to the housing and joins adjacent panel members in the housing, wherein the seam defines a seam channel that is external to the passageway of the housing, and the seam is configured to allow slurry to flow into the seam channel; and
intumescent material that is supported on the internal surface of the housing with respect to the passageway, wherein the intumescent material swells in response to heat,
whereby engagement of the housing within the hardened material of the building element is provided by the hardened material extending around the seams and into the seam channels.

2. A firestopping device according to claim 1, wherein each interconnection is assembled to define an elongate opening that extends parallel with each respective seam, whereby slurry is able to flow into the seam channel via the elongate opening.

3. A firestopping device according to claim 1 or 2, wherein one or more of the panel members has apertures adjacent to lateral edges of the respective panel member that open into the seam channel, whereby slurry is able to flow into the seam channel via the apertures.

4. A firestopping device according to claim 3, wherein each seam is formed by interlocking hem formations at lateral edge portions of the respective panel members, one of the hem formations being an outer seam portion with an open loop formation, and the other of the hem formations being an inner seam portion that is shaped to locate within the outer seam portion,
and preferably the apertures adjacent to the lateral edges of the panel members are located in the portion of the respective panel member that includes one of the hem formations.

5. A firestopping device according to claim 4, wherein the inner and outer seam portions are configured such that the hem formation of the inner seam portion is locatable within hem formation of the outer seam portion by sliding the inner seam portion longitudinally into the outer seam portion, and/or
wherein the inner and outer seam portions are configured such that the hem formation of the inner seam portion is locatable within hem formation of the outer seam portion by transversely forcing the inner seam portion into the space surrounded by the outer seam portion.

6. A firestopping device according to claim 4 or 5, wherein the hem formation of the inner seam portion has an open loop formation.

7. A firestopping device according to any one of claims 4 to 6, wherein the interconnection is formed to permit limited relative displacement of the inner seam portion within the outer seam portion in a direction that is generally orthogonal to the longitudinal direction of the housing.

8. A firestopping device according to claim 7, wherein the inner seam portion and/or the outer seam portion are formed such that when external pressure is applied to the panel members and when the inner seam portion is at the limit of relative displacement within the outer seam portion acts to enhance engagement of the inner and outer seam portions of the respective interconnection.

9. A firestopping device according to any one of claims 4 to 8, wherein each interconnection is formed with at least one slot in one of the inner and outer seam portions, and at least one locking tab in the other of outer and inner seam portions, whereby when the respective panel members are in predetermined alignment with one another, the locking tab is bent from an initial position to a deflected position to project through the at least one slot, whereby with the locking tab in the deflected position and extending through the slot, the disassembly of the interconnection is inhibited.

10. A firestopping device according to any one of claims 1 to 9, further comprising one or more rib formations that are shaped to provide resistance to pressure-induced deflection of the panel members, and/or to provide engagement with the hardened material of the building element.

11. A firestopping device according to any one of claims 1 to 10, further comprising a lid that is configured to cover the second longitudinal end of the passageway, and to block slurry entering the passageway,
wherein the lid includes a planar primary section that has a periphery that is dimensioned to be larger than the cross section of the passageway, and flanges that each project from a first side of the primary section in a direction that is transverse to the plane of the primary section, wherein when the lid is fitted to the housing, the flanges locate the lid with respect to the passageway.

12. A firestopping device according to claim 11, wherein:
the lid is formed such that, when fitted to the housing, at least some of the flanges are inner flanges that configured are to contact internal surfaces of the housing at the second longitudinal end, and/or
the lid has a pair of the inner flanges, wherein the pair of inner flanges contact the housing on opposing faces of the housing.

13. A firestopping device according to claim 11 or 12, wherein the lid is formed such that, when fitted to the housing, at least some flanges are outer flanges that are configured to contact external surfaces of the housing at the second longitudinal end,
and preferably the lid is formed with a second pair of the outer flanges, wherein the pair of outer flanges contact the housing on opposing sides of the housing.

14. A firestopping device according to any one of claims 1 to 13, wherein the housing has four panel members that are joined such that the passageway has a generally rectangular cross section, and/or
the housing has four interconnections that are each formed with the seam.

15. A firestopping device according to any one of claims 1 to 14, further comprising an extension sleeve that has:
two or more panel members that are formed of sheet material, the panel members being joined by interconnections to define a passageway that extends between first and second longitudinal ends, and
one or more of the interconnections being formed with a seam that joins adjacent panel members in the extension sleeve, wherein the seam defines a seam channel that is external to the passageway of the extension sleeve,
wherein the housing and the extension sleeve are configured to be secured to one another, and with the passageways of the housing and the extension sleeve being in alignment with one another in the longitudinal direction, whereby when the firestopping device is installed in a building, service components are to extend through the aligned passageways.
